# FASCICULE DE BREVET EUROPEEN

(11) **EP 2 065 305 B1**
(45) Date de publication et mention de la délivrance du brevet: **05.01.2011**
(21) Numéro de dépôt: 08020264.1
(22) Date de dépôt: 21.11.2008
(51) Int. Cl.: B64D 33/02, F02C 7/047, F04D 29/70, F02C 7/052, B01D 46/52, B01D 46/44, B01D 46/12

(54) **Entrée d'air d'un turbomoteur pourvue d'un système de filtration contrôlé et procédé de filtration associé**
Lufteinlass eines Turbinentriebwerks mit gesteuertem Filtrationssystem, und zugehöriges Filtrationsverfahren
Air intake for a turboengine with a controlled filtration system and corresponding filtration method

(30) Priorité: 30.11.2007 FR 0708376
(43) Date de publication de la demande: 03.06.2009
(73) Titulaire: EUROCOPTER, 13725 Marignane Cédex (FR)
(72) Inventeur: Colaprisco, Marc, 13180 Gignac la Nerthe (FR)
(74) Mandataire: GPI & Associés

(56) Documents cités:
- US-A- 3 411 272
- US-A- 3 651 659

## Description

La présente invention concerne une entrée d'air de turbomoteur d'aéronef pourvue d'un système de filtration contrôlé. Le domaine technique de l'invention se rapporte donc à celui des entrées d'air de turbomoteur.

En effet, les giravions étant amenés à fonctionner dans des environnements variés et dans des conditions extrêmes, le ou les turbomoteurs d'un giravion doivent être protégés pour supporter de telles conditions.

En premier lieu, le souffle du rotor de sustentation du giravion pouvant soulever de la poussière lors du décollage, ainsi que des graviers déposés sur le sol, il est impératif de protéger l'entrée d'air du ou des turbomoteurs du giravion afin que ces derniers n'ingèrent pas les éléments précités. Par suite, il est nécessaire d'éliminer les particules en suspension dans l'air absorbé par les turbomoteurs du giravion, notamment si le giravion est utilisé dans des régions sablonneuses dont l'air est saturé de particules de sables.

En second lieu, les giravions peuvent être amenés à voler dans des conditions dites givrantes. Durant ce type de vol, le givre peut obturer partiellement, voire même totalement, l'entrée d'air d'un turbomoteur du giravion ce qui implique une baisse importante, voire totale, de la puissance développée par ce turbomoteur. De même, de la glace peut être ingérée par le turbomoteur, cette glace étant alors apte à perturber gravement le fonctionnement de ce turbomoteur ou à le détériorer.

Par conséquent, afin de voler dans des conditions particulières, à savoir dans des atmosphères chargées en particules ou en givre par exemple, il convient de protéger le ou les turbomoteurs de l'aéronef et en particulier leur entrée d'air pour garantir des performances optimales du turbomoteur.

De même, il convient éventuellement de s'assurer que le turbomoteur ne va pas ingérer des volatiles, ces derniers pouvant s'avérer très destructeurs par rupture des aubes du compresseur du turbomoteur par exemple.

Les constructeurs d'aéronefs ont donc conçu des dispositifs pour protéger les entrées d'air des turbomoteurs de manière à empêcher l'ingestion de particules par ces turbomoteurs. Le terme « particule » englobe par commodité les volatiles, ce qui implique que dans la suite du texte on entendra par « particule » tout élément présent dans l'air et susceptible d'endommager le turbomoteur.

On connaît par le document WO2007090011 un premier système de filtration comportant un moyen de filtrage flexible agencé dans un cadre possédant deux bords latéraux.

La flexibilité des bords latéraux du cadre et du moyen de filtration permet de déformer le système de filtration afin de l'agencer sur un aéronef.

Néanmoins, ce premier système de filtration n'est pas contrôlable, le pouvoir de filtration du système étant constant mis à part une baisse naturelle due à une obturation du moyen de filtrage lors de son utilisation. Or, il peut être intéressant de contrôler ce pouvoir de filtration afin par exemple de le réduire à son minimum en cas de colmatage du moyen de filtrage.

En effet, si le moyen de filtrage est colmaté, le turbomoteur ne sera plus alimenté en air ce qui conduira à son arrêt et éventuellement à une situation catastrophique.

De même, le document US5674303 décrit un deuxième système de filtration qui n'est pas contrôlable.

Ce deuxième système de filtration comporte une enveloppe dont la surface interne définit une veine dans laquelle est agencé un moyen de filtrage.

De plus, un joint flexible est disposé entre la surface interne de l'enveloppe et le moyen de filtrage. Ce joint flexible permet au moyen de filtrage de se déplacer selon le sens de l'écoulement du fluide au travers de la veine sous l'influence d'éventuelles vibrations.

Par conséquent, ce deuxième système de filtration est bien adapté pour lutter contre des vibrations potentiellement destructives mais ne comportent aucun moyen afin de régler son pouvoir de filtration.

Le document GB853646 décrit un troisième système de filtration agencé dans la veine d'écoulement d'air d'une entrée d'air d'un turbomoteur.

Ce troisième système de filtration comporte un moyen de filtrage disposé à l'intérieur d'une ogive. En fonctionnement, l'ogive effectue un mouvement de translation afin que le moyen de filtrage puisse être déployé.

Bien qu'efficace, ce troisième système de filtrage présente l'inconvénient d'obturer une grande partie de la veine d'écoulement d'air ce qui limite le débit d'air transmis au turbomoteur.

De plus, le déploiement du moyen de filtrage n'est pas modulable, le pouvoir de filtration du système de filtration pouvant alors être soit nul, soit maximal.

Enfin, le document DE2213352 propose un quatrième système de filtration destiné à protéger un turbomoteur contre l'ingestion de volatiles.

Un moyen de filtrage, à savoir un large lien sans fin constitué d'un treillis, est mis en mouvement par des rouleaux tournant autour de leur axe de rotation, via un moyen d'entraînement.

De plus, une portion de ce moyen de filtrage est disposée en amont d'un turbomoteur.

Le treillis du moyen de filtrage ayant deux orifices, lorsque ces deux orifices se trouvent vis-à-vis l'un de l'autre, au niveau de ladite portion, l'air incident traverse les orifices du moyen de filtrage et parvient dans le turbomoteur. Cet air incident n'est donc pas filtré.

A contrario, à l'aide des rouleaux, il est possible de décaler ces orifices l'un par rapport à l'autre. L'air incident traverse alors le treillis du moyen de filtrage avant d'atteindre le turbomoteur.

Toutefois, on constate que ce quatrième système est particulièrement encombrant. De plus, les frottements existant entre les rouleaux et le moyen de filtrage sont importants et donc destructeurs, ce qui limite considérablement sa durée de vie.

De plus, ce quatrième système de filtrage étant destiné à prévenir l'entrée d'éléments de taille relativement importante, à savoir des volatiles, le moyen de filtrage ne parait pas modulable, le pouvoir de filtration du système de filtration pouvant alors être soit nul, soit maximal. Le document US 3411272 propose un cinquiéme systéme de filtration à l'entrée d'un turbomoteur d'helicoptére.

La présente invention a alors pour objet de proposer une entrée d'air d'aéronef, un hélicoptère par exemple, permettant de s'affranchir des limitations mentionnées ci-dessus en étant pourvue d'un système de filtration contrôlable robuste.

Selon l'invention définie dans la revendication 1 adjointe, une entrée d'air est munie d'une veine d'écoulement pour guider de l'air incident vers un turbomoteur d'aéronef, cette entrée d'air étant aussi pourvue d'une section d'entrée par laquelle l'air pénètre dans ladite veine et d'un système de filtration.

L'invention est remarquable en ce que, le système de filtration étant muni d'un moyen de filtrage pliable agencé au niveau de la section d'entrée de la veine, ce système de filtration comporte un moyen de commande qui exerce un effort selon une première direction sur une extrémité libre du moyen de filtrage pliable pour régler le pouvoir de filtration du système de filtration, de sorte que le moyen de filtrage puisse atteindre n'importe quel niveau de filtration compris entre un pouvoir de filtration nul et un pouvoir de filtration maximal. De plus, le système de filtration possède un moyen de guidage permettant de guider le déplacement, induit par le moyen de commande, de l'extrémité libre du moyen de filtrage.

Contrairement à l'art antérieur connu, le système de filtration est équipé d'un moyen de filtrage agencé au niveau de la section d'entrée de la veine de l'entrée d'air, pour ne pas limiter indument l'écoulement d'air au travers de cette veine. De même, pour maximiser cet effet, il est avantageux d'agencer le moyen de commande à l'extérieur de la veine.

De plus, le moyen de commande est apte à régler très précisément le pouvoir de filtration du système de filtration en agissant sur son moyen de filtrage afin d'atteindre n'importe quel niveau de puissance de filtration d'une plage prédéterminée, et non pas un ou deux niveaux de puissance seulement.

Comme nous le verrons par la suite, il devient possible de régler ce pouvoir de filtration en fonction d'une pluralité de paramètres de surveillance et de réglage.

Le moyen de filtrage étant souple, le moyen de guidage s'avère important. En effet, ce moyen de guidage évite que le moyen de filtrage se déplace dans une direction non souhaitée sous l'action du moyen de commande. Le déplacement du moyen de filtrage ne pouvant être aléatoire, il est plus facile de régler le pouvoir de filtration du système de filtration.

De préférence, la première direction, selon laquelle le moyen de commande exerce un effort sur une extrémité libre du moyen de filtrage et donc selon laquelle cette extrémité libre se déplace, présente une angulation comprise entre 75 et 125 degrés à une deuxième direction selon laquelle l'air traverse ladite section d'entrée.

On assure ainsi l'absence d'éléments du système de filtration dans la veine de l'entrée d'air.

Par ailleurs, le moyen de filtrage pliable comporte un filtre plan muni de fibres, des fibres de coton ou des fibres synthétiques par exemple, le filtre plan étant plié en accordéon afin que la dimension du moyen de filtrage pliable selon la première direction puisse être variable.

Il devient possible de comprimer ou de détendre le moyen de filtrage pliable pour faire varier son pouvoir de filtration.

Il convient de préciser que l'expression « plier en accordéon » est une expression bien connue par l'homme du métier des filtres ce qui la rend parfaitement claire en l'état. Un filtre plié en accordéon comporte alors une pluralité de segments plats, un segment étant articulé à deux segments adjacents respectivement par ses premier et deuxième bords longitudinaux. De par ses articulations, il est possible d'agrandir ou de réduire la dimension du moyen de filtrage selon une direction transverse à sa direction longitudinale, en comprimant ou en détendant le moyen de filtrage selon cette direction transverse.

Un tel moyen de filtrage s'avère très robuste et aisé à réaliser, en pliant donc en accordéon une feuille de fibres.

Pour contrôler le déplacement d'au moins l'extrémité libre du moyen de filtrage, le système de filtration est pourvu d'un moyen de guidage qui comporte éventuellement au moins une grille, une grille extérieure disposée en amont du moyen de filtrage par rapport au sens d'écoulement de l'air au travers du système de filtration.

Avantageusement, le système de filtration est muni de deux grilles qui enserrent le moyen de filtrage afin de constituer un fourreau de maintien, à savoir une grille extérieure et une grille intérieure disposées respectivement en amont et en aval du moyen de filtrage par rapport au sens d'écoulement de l'air au travers du système de filtration

De plus, ledit système de filtration peut être muni d'un moyen de chauffage de ladite au moins une grille. Le moyen de chauffage est par exemple équipé d'un générateur électrique apte à faire passer un courant électrique dans chaque grille.

Le passage du courant électrique génère alors un échauffement de chaque grille de manière à éviter le dépôt de givre sur le treillis des grilles notamment.

Selon un premier mode de réalisation, le moyen de commande comprime ou détend le moyen de filtrage pour faire varier sa dimension, selon ladite première direction en fonction du besoin, de manière à régler le pouvoir de filtration du système de filtration.

En effet, une extrémité distale du moyen de filtrage, opposée à son extrémité libre, étant fixée à un carénage de l'entrée d'air, lorsque le moyen de commande exerce un effort sur l'extrémité libre du moyen de filtrage, ce moyen de commande induit nécessairement une compression ou une détente du moyen de filtrage ce qui permet de faire varier son pouvoir de filtration.

Par exemple, en poussant l'extrémité libre selon la première direction, le moyen de commande peut comprimer le moyen de filtrage de manière à réduire sa dimension selon cette première direction, alors qu'en tirant sur cette extrémité libre, le moyen de commande détend le moyen de filtrage de manière à augmenter sa dimension selon cette première direction.

Selon un deuxième mode de réalisation qui constitue une amélioration du premier mode de réalisation, lorsque ladite dimension est maximisée, le moyen de filtrage est en saillie de la section d'entrée.

Selon un troisième mode de réalisation, le moyen de commande déplace le moyen de filtrage sans modifier sa géométrie, selon la première direction.

Le moyen de commande ne compresse ni ne détend le moyen de filtrage mais déplace ce moyen de filtrage.

Par suite, lorsque le moyen de filtrage est dans une position de filtration maximale, ce moyen de filtrage obture l'intégralité de la section d'entrée de la veine. L'air incident doit obligatoirement traverser le moyen de filtrage avant de parvenir au turbomoteur.

A contrario, lorsque le moyen de commande déplace le moyen de filtrage, ce dernier obture partiellement la section d'entrée. Par suite, le pouvoir de filtration du système de filtration diminue dans la mesure où de l'air non filtré peut parvenir au turbomoteur.

En déplaçant totalement le moyen de filtrage, on ne filtre absolument plus l'air incident traversant l'entrée d'air pour alimenter le turbomoteur.

Le troisième mode de réalisation n'est pas couvert par les revendications mais est utile à la compréhension de l'invention.

Selon une première variante des modes de réalisation de l'invention, le moyen de filtrage est contenu dans un plan.

Par suite, le moyen de commande comporte au moins un vérin agencé dans ce plan pour exercer un effort sur le moyen de filtrage selon la première direction.

Selon une deuxième variante des modes de réalisation de l'entrée d'air, le moyen de filtrage comporte au moins une portion filtrante qui décrit un arc de cercle, éventuellement quatre portions décrivant chacune un champ angulaire de 90 degrés. Cette deuxième variante est particulièrement bien adaptée au turbomoteur alimenté radialement en air.

Par exemple, le moyen de commande comporte alors un actionneur et un cerceau solidarisé à l'extrémité libre de chaque portion filtrante du moyen de filtrage, cet actionneur étant apte à faire effectuer un mouvement rotatif au cerceau autour de son centre de rotation.

Le moyen de commande permet alors de faire tourner le cerceau, ce dernier exerçant un effort sur chaque extrémité libre de chaque portion filtrante du moyen de filtrage.

La présente invention a aussi pour objet le procédé selon la revendication 13 mettant en oeuvre l'entrée d'air décrite précédemment, permettant de profiter au maximum de ses innovations.

Ainsi, selon l'invention, un procédé pour filtrer l'air entrant dans un turbomoteur d'aéronef à l'aide d'une entrée d'air munie d'un système de filtration comportant un moyen de filtrage, un moyen de guidage et un moyen de commande, est remarquable en ce que, durant une phase de réglage, lorsqu'un moyen de contrôle de ladite entrée d'air détecte la présence non souhaitée de particules dans l'air à l'aide d'informations relatives à au moins un paramètre de surveillance et transmises par au moins un capteur, le moyen de contrôle ordonne une augmentation ou une diminution du pouvoir de filtration du moyen de filtrage en fonction d'au moins un paramètre de réglage.

La filtration de l'air est donc précisément réalisée par le moyen de filtrage en fonction de paramètres de surveillance et de réglage.

Plus précisément, ledit au moins un paramètre de surveillance est choisi dans la première liste suivante qui comprend :
- la taille des particules contenues dans l'air en amont du moyen de filtrage,
- le nombre de particules contenues dans l'air en amont du moyen de filtrage,
- la taille des particules contenues dans l'air en aval du moyen de filtrage,
- le nombre de particules contenues dans l'air en aval du moyen de filtrage, et
- la perte de charge générée par le moyen de filtrage.

Par suite, si des particules sont détectées dans l'air par un capteur, le moyen de contrôle va ordonner au moyen de commande d'exercer un effort sur le moyen de filtrage selon une première direction.

Pour déterminer précisément- le pouvoir de filtration à atteindre dans une situation particulière, le moyen de contrôle reçoit des informations relatives à au moins un paramètre de réglage choisi dans la deuxième liste suivante qui comprend :
- la taille des particules admissibles par le turbomoteur,
- les conditions atmosphériques extérieures à l'aéronef, telles que la pression de l'air extérieur, la température de l'air extérieur et l'altitude de l'aéronef, et
- la santé du turbomoteur, tel que le potentiel de vol restant pour le turbomoteur.

Par ailleurs, durant une phase préliminaire préalable à la phase de réglage, l'aéronef étant un aéronef bimoteur, si un seul turbomoteur fonctionne alors le moyen de contrôle active le moyen de commande pour minimiser le pouvoir de filtration du moyen de filtrage. Ce pouvoir de filtration peut devenir nul, le moyen de filtration ne filtrant plus l'air entrant dans la veine de l'entrée d'air du turbomoteur.

En outre, durant une phase optionnelle, lorsqu'un moyen de contrôle de ladite entrée d'air détecte la présence de givre, ce moyen de contrôle active un moyen de chauffage pour chauffer une grille d'un moyen de guidage du moyen de filtrage.

Enfin, durant une phase de contrôle, lorsqu'un moyen de contrôle de l'entrée d'air détecte une obturation au moins partielle du moyen de filtrage, ce moyen de contrôle active le moyen de commande du système de filtration pour déboucher le moyen de filtrage.

Par exemple, le moyen de contrôle va ordonner au moyen de commande de faire bouger brutalement le moyen de filtrage afin de générer des chocs aptes à déboucher le moyen de filtrage.

Si le résultat recherché n'est pas obtenu, le moyen de contrôle ordonnera au moyen de commande d'agir sur le moyen de filtrage pour que l'air entrant dans la section d'entrée de la veine ne soit plus filtré.

L'invention et ses avantages apparaîtront avec plus de détails dans le cadre de la description qui suit, avec des exemples de réalisation donnés à titre illustratif en référence aux figures annexées qui représentent :
- la figure 1, une coupe schématique d'une entrée d'air selon l'invention,
- les figures 2a et 2b, des coupes d'une entrée d'air selon une première variante du premier mode de réalisation dans deux positions distinctes,
- les figures 3a et 3b, des coupes d'une entrée d'air selon une deuxième variante du premier mode de réalisation dans deux positions distinctes,
- les figures 4a, 4b, 4c, des coupes d'une entrée d'air selon une première variante du deuxième mode de réalisation dans trois positions distinctes,
- la figure 5, une coupe d'une entrée d'air selon une deuxième variante du deuxième mode de réalisation,
- la figure 6, une vue d'une entrée d'air selon un troisième mode de réalisation, et
- la figure 7, un schéma explicitant le procédé selon l'invention.

Les éléments présents dans plusieurs figures distinctes sont affectés d'une seule et même référence.

On note que trois directions X, Y et Z orthogonales les unes par rapport aux autres sont représentées sur les figures.

La direction X est dite longitudinale, par rapport au turbomoteur, une autre direction Y étant dite transversale.

Cette direction transverse Y est dénommée « première direction » dans le référentiel lié au système de filtration ; alors que la direction longitudinale X est aussi dénommée « deuxième direction ».

Enfin, une direction Z est dite d'élévation et correspond aux dimensions en hauteur des structures décrites.

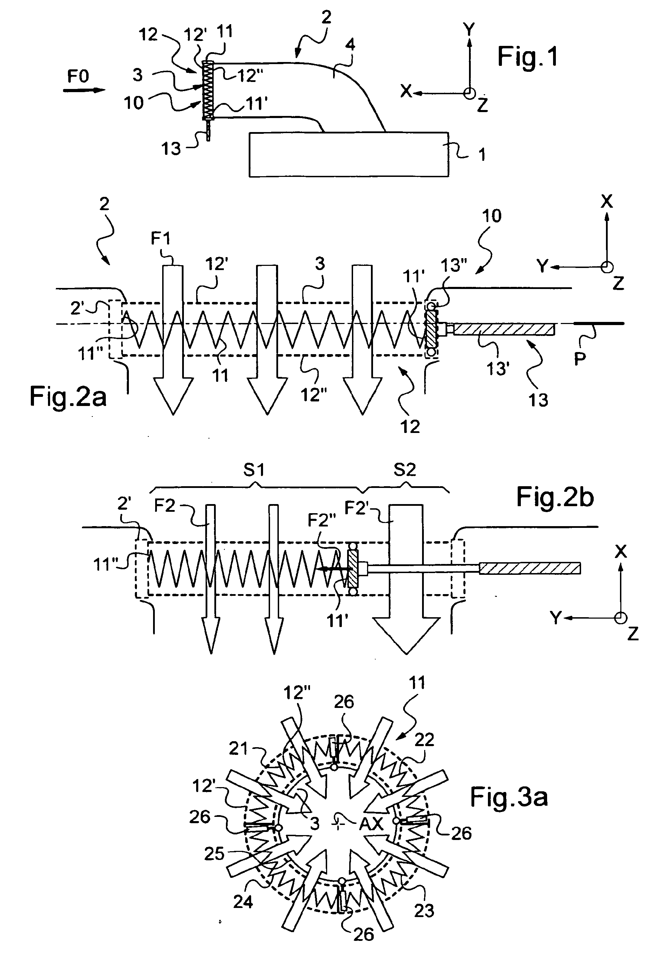

La figure 1 présente une coupe schématique d'une entrée d'air 2 d'un turbomoteur 1 d'aéronef.

Cette entrée d'air 2 capte de l'air via sa section d'entrée 3 pour le diriger vers le turbomoteur 1 à l'aide de sa veine 4 d'écoulement d'air.

Afin de ne pas alimenter le turbomoteur avec de l'air pollué contenant des particules, du sable par exemple, l'entrée d'air 2 est équipée d'un système de filtration 10 pourvu d'un moyen de filtrage 11 agencé au niveau de sa section d'entrée 3. L'air passant au travers du moyen de filtrage est alors filtré de manière à ne pas transporter des particules nocives vers le turbomoteur 1.

Par suite, le moyen de filtrage 11 est par exemple constitué d'une feuille de fibres, telles que des fibres de coton ou des fibres synthétiques, cette feuille étant pliée en accordéon comme le montre la figure 1.

De par ce pliage en accordéon, il est possible de déformer le moyen de filtrage 11, en le comprimant ou en le détendant notamment, afin de faire varier sa dimension selon la première direction Y.

De plus, afin de contrôler son pouvoir de filtration de l'air, le système de filtration 10 est muni d'un moyen de commande 13 qui exerce un effort sur une extrémité libre 11' du moyen de filtrage selon une première direction Y.

On note que la première direction Y selon laquelle est exercé un effort sur le moyen de filtrage 11 est perpendiculaire à une deuxième direction X empruntée par l'air entrant dans la section d'entrée 3, comme le montre la flèche F0.

En outre, il convient de maitriser le mouvement du moyen de filtrage 11 généré par l'effort induit par le moyen de commande 13. Par suite, le système de filtration 10 comporte un moyen de guidage 12. Ce moyen de guidage 12 possède par exemple une grille extérieure 12' et une grille intérieure 12" disposées respectivement en amont et en aval du moyen de filtrage 11, les termes « amont » et « aval » étant définis par rapport au sens d'écoulement F0 au travers du système de filtration 10.

En enserrant le moyen de filtrage entre ces grilles extérieure 12' et intérieure 12", on guide parfaitement le déplacement de l'extrémité libre 11' du moyen de filtrage.

De manière alternative, il est possible d'utiliser uniquement la grille extérieure, le moyen de filtrage étant guidé par exemple par un cheminement métallique de ladite grille extérieure traversant le moyen de filtrage. De façon imagée, l'ensemble cheminement/moyen de filtrage fonctionne comme un ensemble tringle à rideaux/rideau.

Avantageusement, il est possible de fournir un moyen de chauffage au système de filtration pour augmenter son efficacité lors d'une utilisation en conditions givrantes. Ce moyen de chauffage, non représenté sur les figures, génère un courant électrique qui parcourt au moins la grille extérieure 12' pour la réchauffer et éviter le givrage de cette dernière.

Enfin, on remarque que le moyen de commande 13 n'est pas agencé dans la veine 4 de l'entrée d'air, mais à l'extérieur de cette veine de manière à ne pas limiter indûment le débit d'air au travers de la veine 4.

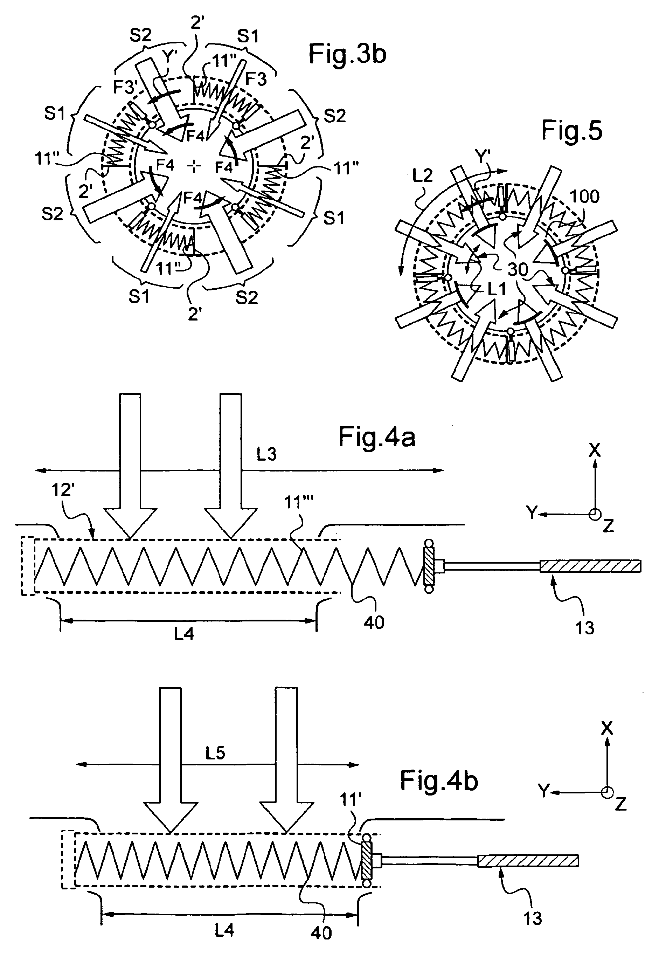

En référence aux figures 2a, 2b, 3a, 3b selon un premier mode de réalisation, le moyen de commande comprime ou détend le moyen de filtrage afin de faire varier sa dimension selon la première direction selon le besoin pour modifier le pouvoir de filtration du système de filtration.

Plus précisément, les figures 2a et 2b sont relatives à une première variante du premier mode de réalisation. Le moyen de filtrage est alors contenu dans le plan P défini à l'aide de la première direction Y et de la direction en élévation Z.

Les grilles extérieure 12' et intérieure 12" sont alors parallèles à ce plan P alors qu'un vérin 13' du moyen de commande 13 est aussi contenu dans le plan P.

De manière optionnelle, le vérin 13' comporte deux roulettes 13" pour faciliter son déplacement entre les grilles extérieure 12' et intérieure 12" du moyen de guidage 12. Ce moyen de guidage guide alors non seulement le moyen de filtration 11 mais aussi le moyen de commande 13, du moins son vérin 13'.

Dans une première position filtrante représentée par la figure 2a, le moyen de filtrage 11 couvre la totalité de la section d'entrée 3 de l'entrée d'air. L'air parvenant au turbomoteur est donc nécessairement filtré.

Par contre et en référence à la figure 2b, s'il s'avère nécessaire de réduire le pouvoir de filtration du système de filtration, pour augmenter le débit d'air à fournir au turbomoteur ou parce que l'air est faiblement pollué, le moyen de commande exerce un effort sur l'extrémité libre 11' du moyen de filtrage 11 selon une première direction Y rectiligne.

L'extrémité distale 11" de ce moyen de filtrage 11 étant fixée à un carénage 2' de l'entrée d'air, l'extrémité libre 11' se déplace selon la flèche F2". Le moyen de filtrage est alors comprimé, sa dimension selon la première direction Y ayant été réduite.

Par suite, une première partie S1 de la section d'entrée 3 est recouverte par le moyen de filtrage, ce moyen de filtrage générant localement une filtration plus importante que précédemment du fait de la compression effectuée.

Cependant, une deuxième partie S2 de la section d'entrée 3 n'est plus recouverte par le moyen de filtrage. L'air traversant cette deuxième partie S2 de la section d'entrée 3 selon la flèche F2' n'est donc pas filtré, alors que l'air traversant la première partie S1 de la section d'entrée 3 selon la flèche F2 est filtré.

On comprend bien que le phénomène n'est pas irréversible, le moyen de commande pouvant détendre le moyen de filtrage pour revenir à la situation décrite par la figure 2a.

On note qu'il est possible de comprimer totalement le moyen de filtrage afin que la section d'entrée 3 ne soit plus du tout recouverte par le moyen de filtrage.

En fin de compte, la dimension du moyen de filtrage selon la première direction peut atteindre n'importe quelle valeur comprise entre zéro et la dimension de la section d'entrée 3 selon première direction Y. Il est donc possible de régler très précisément le pouvoir de filtration du système de filtration 10.

Les figures 3a et 3b sont relatives à une deuxième variante du premier mode de réalisation. Le moyen de filtrage comporte alors au moins une portion filtrante 21, 22, 23, 24 qui décrit un arc de cercle, plus précisément quatre portions sur les figures 3a et 3b.

Le moyen de commande est alors pourvu d'un cerceau 25 auquel sont solidarisées les extrémités libres de chaque moyen de filtrage par un moyen de fixation 26.

De plus, le moyen de commande possède un actionneur, non représenté sur les figures pouvant faire effectuer un mouvement rotatif au cerceau 25 autour de son axe de rotation AX, normal au plan des figures 3a et 3b.

Dans une première position filtrante représentée par la figure 3a, les portions 21, 22, 23, 24 du moyen de filtrage 11 couvrent la totalité de la section d'entrée 3 de l'entrée d'air. L'air parvenant au turbomoteur est donc nécessairement filtré.

Par contre et en référence à la figure 3b, il peut s'avérer nécessaire de réduire le pouvoir de filtration du système de filtration, pour augmenter le débit d'air à fournir au turbomoteur en cas de colmatage partiel du moyen de filtrage par exemple.

Par suite, le moyen de commande exerce un effort sur l'extrémité libre 11' du moyen de filtrage 11 selon la première direction Y'. Contrairement à la première variante, cette première direction Y' n'est pas rectiligne mais incurvée de manière à ce que l'extrémité libre de chaque portion du moyen de filtrage se déplace le long de l'arc de cercle décrit par la portion.

En effet, l'extrémité distale 11" de chaque portion 21, 22, 23, 24 du moyen de filtrage 11 étant fixée à un carénage 2' de l'entrée d'air, chaque extrémité libre 11' se déplace selon la flèche F4. Chaque portion du moyen de filtrage est alors comprimé, sa dimension selon la première direction Y' ayant été réduite.

Par suite, une première partie S1 de la section d'entrée 3 est recouverte par le moyen de filtrage, ce moyen de filtrage générant localement une filtration plus importante que précédemment du fait de la compression effectuée.

Cependant, une deuxième partie S2 de la section d'entrée 3 n'est plus recouverte par le moyen de filtrage. L'air traversant deuxième partie S2 de la section d'entrée 3 selon la flèche F3' n'est donc pas filtré, alors que l'air traversant la première partie S1 de la section d'entrée 3 selon la flèche F3 est filtré.

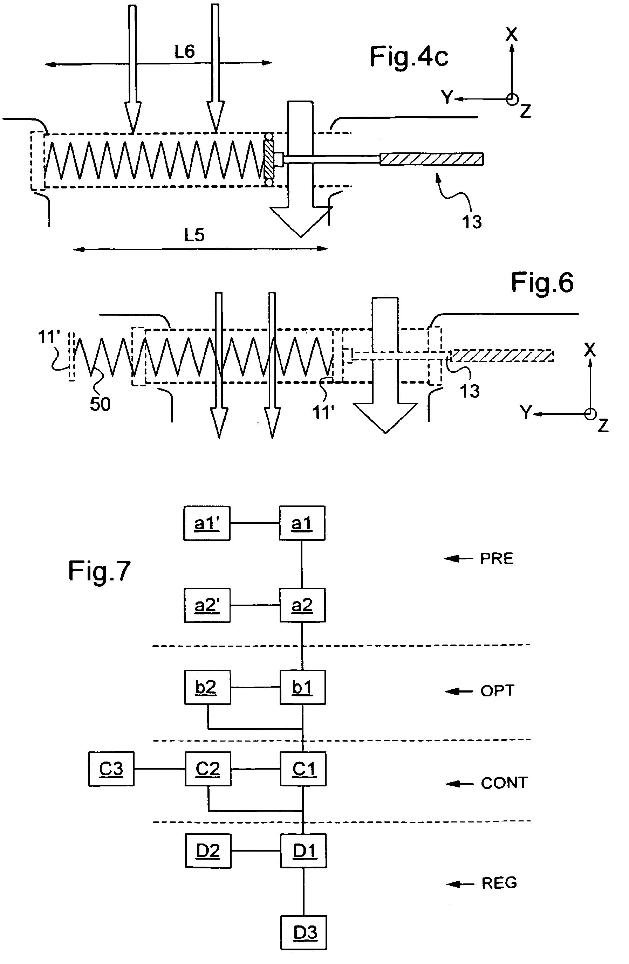

Les figures 4a, 4b, 4c et 5 présentent un deuxième mode de réalisation. Comme pour le premier mode de réalisation, le moyen de commande comprime ou détend le moyen de filtrage afin de faire varier sa dimension selon la première direction, selon le besoin, pour modifier le pouvoir de filtration du système de filtration.

A contrario, selon le deuxième mode de réalisation, lorsque la dimension du moyen de filtrage selon la première direction est maximisée, le moyen de filtrage est en saillie de la section d'entrée. Ce moyen de filtrage couvre ainsi une surface supérieure à la surface de la section d'entrée. Le moyen de filtrage n'obture pas seulement la section d'entrée, mais forme de plus une saillie de cette dernière.

La figure 4a présente une coupe schématique de la première variante de ce deuxième mode de réalisation.

Le moyen de filtrage est dans une position intermédiaire pour lequel le pouvoir de filtration du système de filtration est modéré. La dimension L3 du moyen de filtrage selon la première direction est supérieure à la longueur L4 de la section d'entrée selon cette même direction.

Plus globalement, la surface couverte par la face supérieure 11'" du moyen de filtrage est supérieure à la surface d'entrée 2' de la section d'entrée.

Le moyen de filtrage obture alors entièrement la section d'entrée. Toutefois, ce moyen de filtrage n'étant pas comprimé, le pouvoir de filtration du moyen de filtrage, et donc du système de filtrage, reste modéré.

S'il s'avère nécessaire de l'augmenter, en référence à la figure 4b, le moyen de commande 13 exerce un effort sur l'extrémité libre pour comprimer le moyen de filtrage. Désormais, le moyen de filtrage couvre toujours l'intégralité de la section d'entrée, mais ne saille plus de cette dernière. La dimension L5 du moyen de filtrage selon la première direction est égale à la longueur L4 de la section d'entrée.

Par conséquent, le moyen de filtrage étant comprimé, le pouvoir de filtration du système de filtration s'en trouve augmenté.

Enfin et conformément à la figure 4c, il reste possible de diminuer la dimension L6 du moyen de filtrage pour ouvrir partiellement, ou totalement la section d'entrée selon le besoin.

En référence à la figure 5, la deuxième variante s'applique aussi au deuxième mode de réalisation.

Contrairement au premier mode de réalisation décrit par les figures 3a et 3b, un élément structural 100 obture partiellement la section d'entrée 30.

Ainsi, on constate que, dans la position intermédiaire, la dimension L2 de chaque portion du moyen de filtrage, selon la première direction Y' incurvée, est supérieure à la longueur L1 de la portion de la section d'entrée 30 en vis à vis de la portion du moyen de filtrage.

La figure 6 présente une vue schématique d'un troisième mode de réalisation.

Conformément à ce mode de réalisation, le moyen de commande 13 déplace le moyen de filtrage selon une première direction Y sans modifier sa géométrie. Le moyen de filtrage n'est ni comprimé, ni détendu.

En effet, l'extrémité distale du moyen de filtrage n'est désormais plus fixée à un carénage. Par suite, l'effort exercé par le moyen de commande 13 entraîne un déplacement contrôlé de l'intégralité du moyen de filtrage.

Dans ce contexte, la figure 6 présente le moyen de filtrage dans une position à laquelle une partie de la section d'entrée n'est pas obturée par le moyen de filtration.

On comprend que la deuxième variante de l'invention est susceptible d'être appliquée à ce troisième mode de réalisation.

La figure 7 présente un schéma explicitant les différentes phases du procédé mis en oeuvre pour qu'un moyen de contrôle, non représenté sur les figures puisse contrôler le pouvoir de filtration du système de filtration en fonction du besoin.

Durant une étape a1) d'une phase préliminaire PRE non obligatoire, le moyen détermine si l'installation motrice de l'aéronef est en mode OEI, dénommé « One Engine Inoperate » par l'homme du métier en langue anglaise.

En effet, sur les hélicoptères bimoteurs lorsque l'un des deux turbomoteurs tombe en panne, il est possible d'activer le mode OEI pour que le turbomoteur restant fournisse suffisamment de puissance pour compenser la perte de puissance de l'autre turbomoteur.

Par suite, si le mode OEI est activé, au cours d'une étape a1'), le moyen de contrôle ordonne au moyen de commande de minimiser le pouvoir de filtration du système de filtration. Le moyen de commande agit alors sur le moyen de filtrage pour que ce dernier n'obture plus du tout la section d'entrée de l'entrée d'air, ce qui permet de maximiser le débit d'air fourni au turbomoteur.

Dans le cas contraire, au cours d'une étape a2), le moyen de contrôle détermine si le système de filtration est en mode manuel.

Le mode manuel fait intervenir, durant une étape a2'), le pilote qui utilise par exemple un potentiomètre pour régler la position du moyen de filtrage et donc le pouvoir de filtration du système de filtration.

Dans la négative, le moyen de contrôle met en oeuvre une phase optionnelle OPT.

Durant une étape b1) de cette phase optionnelle OPT, le moyen de contrôle reçoit un signal de givrage provenant d'un capteur de givre. Si ce signal indique au moyen de contrôle que l'aéronef vole dans des conditions givrantes, alors le moyen de contrôle alimente le moyen de chauffage des grilles du moyen de guidage durant une étape b2).

Suite à cette phase optionnelle, le moyen de contrôle peut entamer une phase de contrôle CONT non obligatoire. Cette phase de contrôle CONT vise à éviter l'utilisation d'un moyen de filtrage qui serait colmaté.

Au cours d'une étape C1), le moyen de contrôle reçoit un signal de colmatage transmis par un capteur de colmatage.

Il est à noter que ce capteur de colmatage, tout comme le capteur de givre d'ailleurs, peut consister en un dispositif mesurant la perte de charge générée par le moyen de filtrage. En fonction de cette perte de charge, et de la position du moyen de filtrage, le moyen de contrôle peut alors en déduire que le moyen de filtrage est colmaté.

Durant une étape C2), le moyen de contrôle ordonne au moyen de commande de déplacer l'extrémité libre du moyen de filtrage selon la première direction dans un sens, puis dans le sens contraire.

Le choc généré par cet aller-retour peut alors éventuellement déboucher le moyen de filtrage.

Néanmoins, si à l'issue d'un nombre prédéterminé d'allers et retours, 5 itérations par exemple, le moyen de filtrage est toujours colmaté, alors le moyen de contrôle met en oeuvre une étape C3) en ordonnant au moyen de commande de minimiser le pouvoir de filtration du système de filtration en ouvrant totalement la section d'entrée.

Enfin, le moyen de contrôle met en oeuvre la phase essentielle du procédé, à savoir la phase de réglage REG du pouvoir de filtration du système de filtration.

Au cours d'une étape D1), le moyen de contrôle évalue la présence de particules dans l'air à l'aide d'informations relatives à au moins un paramètre de surveillance transmises par au moins un capteur.

Chaque paramètre de surveillance est choisi dans la première liste suivante qui comprend :
- la taille des particules contenues dans l'air en amont du moyen de filtrage,
- le nombre de particules contenues dans l'air en amont du moyen de filtrage,
- la taille des particules contenues dans l'air en aval du moyen de filtrage,
- le nombre de particules contenues dans l'air en aval du moyen de filtrage, et
- la perte de charge générée par le moyen de filtrage.

En fonction des informations reçues, tel qu'un nombre de particules contenues dans l'air en amont du moyen de filtrage supérieur à un nombre prédéterminé par exemple, le moyen de contrôle peut être amené à ordonner une augmentation ou une diminution du pouvoir de filtration du moyen de filtrage en fonction d'au moins un paramètre de réglage.

Ainsi, pour déterminer précisément le pouvoir de filtration à atteindre dans une situation particulière, au cours d'une étape D2) , le moyen de contrôle reçoit des informations relatives à au moins un paramètre de réglage choisi dans la deuxième liste suivante qui comprend :
- la taille des particules admissibles par le turbomoteur,
- les conditions atmosphériques extérieures à l'aéronef, telles que la pression de l'air extérieur, la température de l'air extérieur et l'altitude de l'aéronef, et
- la santé du turbomoteur, tel que le potentiel de vol restant pour le turbomoteur.

Par exemple, si le nombre de particules contenues dans l'air en amont du moyen de filtrage est supérieur à un nombre prédéterminé mais si la taille des particules admissibles par le turbomoteur est supérieure à la taille des particules contenues dans l'air, le moyen de contrôle ordonnera au moyen de commande de minimiser le pouvoir de filtration du système de filtration.

## Revendications

1. Entrée d'air (2) munie d'une veine (4) d'écoulement pour guider de l'air incident vers un turbomoteur (1) d'aéronef, ladite entrée d'air (2) étant pourvue d'une section d'entrée (3) par laquelle l'air pénètre dans ladite veine (4) et d'un système de filtration,
le système de filtration (10) étant muni d'un moyen de filtrage(11) pliable agencé au niveau de la section d'entrée (3) de la veine, ledit système de filtration (10) comportant un moyen de commande (13) **caractérisée en ce que** le moyen de commande (13) permet d'exercer un effort selon une première direction (Y, Y') sur une extrémité libre (11') dudit moyen de filtrage (11) pliable pour comprimer ou détendre ledit moyen de filtrage (10) afin de faire varier sa dimension de manière à régler le pouvoir de filtration du système de filtration (10), un moyen de guidage (12) du système de filtration (10) permettant de guider le déplacement de ladite extrémité libre (11') induit par ledit moyen de commande (13).

2. Entrée d'air selon la revendication 1,
**caractérisée en ce que** ledit moyen de commande (13) est agencé à l'extérieur de ladite veine (4).

3. Entrée d'air selon l'une quelconque des revendications précédentes,
**caractérisée en ce que** ladite première direction (Y, Y') présente une angulation comprise entre 75 et 125 degrés avec une deuxième direction (X) selon laquelle l'air traverse ladite section d'entrée (3).

4. Entrée d'air selon l'une quelconque des revendications précédentes,
**caractérisée en ce que** ledit moyen de filtrage (11) pliable comporte un filtre plan muni de fibres, ledit filtre plan étant plié en accordéon afin que la dimension selon ladite première direction (Y, Y') du moyen de filtrage (11) pliable puisse être variable.

5. Entrée d'air selon l'une quelconque des revendications précédentes,
**caractérisée en ce que** ledit moyen de guidage (12) comporte au moins une grille (12') disposée en amont du moyen de filtrage (11) par rapport au sens d'écoulement de l'air au travers du système de filtration (10),

6. Entrée d'air selon la revendication 5,
**caractérisée en ce que** ledit système de filtration (10) est muni d'un moyen de chauffage de ladite grille (12', 12").

7. Entrée d'air selon l'une quelconque des revendications précédentes,
**caractérisée en ce que**, ledit moyen de commande (13) comprime ou détend le moyen de filtrage (11) pour faire varier sa dimension (L3) selon ladite première direction (Y, Y') en fonction du besoin.

8. Entrée d'air selon la revendication 7,
**caractérisée en ce que**, lorsque ladite dimension (L3) est maximisée, le moyen de filtrage (11) est en saillie de la section d'entrée (3),

9. Entrée d'air selon l'une quelconque des revendications précédentes,
**caractérisée en ce que** ledit moyen de filtrage (11) est contenu dans un plan.

10. Entrée d'air selon la revendication 9,
**caractérisée en ce que** ledit moyen de commande (13) comporte au moins un vérin (13') agencé dans ledit plan pour exercer un effort sur le moyen de filtrage (11) selon ladite première direction (Y).

11. Entrée d'air selon l'une quelconque des revendications 1 à 8,
**caractérisée en ce que** ledit moyen de filtrage (11) comporte au moins une portion filtrante (21, 22, 23, 24) qui décrit un arc de cercle.

12. Entrée d'air selon la revendication 11,
**caractérisée en ce que** ledit moyen de commande (13) comporte un actionneur et un cerceau (25) solidarisé à l'extrémité libre (11') de chaque portion filtrante (21, 22, 23, 24) du moyen de filtrage (11), ledit actionneur étant apte à faire effectuer un mouvement rotatif au dit cerceau (25) autour de son centre de rotation.

13. Procédé pour filtrer l'air entrant dans un turbomoteur (1) d'aéronef à l'aide d'une entrée d'air (2) selon l'une quelconque des revendications précédentes munie d'un système de filtration (10) comportant un moyen de filtrage (11) pliable, un moyen de guidage (12) et un moyen de commande (13),
au cours duquel, durant une phase de réglage (REG), lorsqu'un moyen de contrôle de ladite entrée d'air (2) détecte la présence non souhaitée de particules dans l'air à l'aide d'informations relatives à au moins un paramètre de surveillance transmises par au moins un capteur, ledit moyen de contrôle ordonne une augmentation ou une diminution du pouvoir de filtration du moyen de filtrage (11) en fonction d'au moins un paramètre de réglage en comprimant ou détendant le moyen de filtrage (11) pour faire varier sa dimension.

14. Procédé selon la revendication 13,
**caractérisé en ce que** ledit au moins un paramètre de surveillance est choisi dans la première liste suivante qui comprend :
- la taille des particules contenues dans l'air en amont du moyen de filtrage (11)
- le nombre de particules contenues dans l'air en amont du moyen de filtrage (11)
- la taille des particules contenues dans l'air en aval du moyen de filtrage (11)
- le nombre de particules contenues dans l'air en aval du moyen de filtrage (11) et
- la perte de charge générée par le moyen de filtrage (11)

15. Procédé selon l'une quelconque des revendications 13 à 14,
**caractérisé en ce que** ledit au moins paramètre de réglage est choisi dans la deuxième liste suivante qui comprend :
- la taille des particules admissibles par le turbomoteur (1),
- les conditions atmosphériques extérieures à l'aéronef, telles que la pression de l'air extérieur, la température de l'air extérieur et l'altitude de l'aéronef, et
- la santé du turbomoteur (1), tel que le potentiel de vol restant pour le turbomoteur (1).

16. Procédé selon l'une quelconques des revendications 13 à 15,
**caractérisé en ce que**, durant une phase préliminaire (PRE), l'aéronef étant un aéronef bimoteur, si un seul turbomoteur (1) fonctionne alors le moyen de contrôle active le moyen de commande pour minimiser le pouvoir de filtration du moyen de filtrage (11).

17. Procédé selon l'une quelconques des revendications 13 à 16,
**caractérisé en ce que**, durant une phase optionnelle (OPT), lorsqu'un moyen de contrôle de ladite entrée d'air (2) détecte la présence de givre, ce moyen de contrôle active un moyen de chauffage pour chauffer une grille (12', 12") d'un moyen de guidage du moyen de filtrage (11).

18. Procédé selon l'une quelconques des revendications 13 à 17,
**caractérisé en ce que**, durant une phase de contrôle (CONT), lorsqu'un moyen de contrôle de ladite entrée d'air (2) détecte une obturation au moins partielle du moyen de filtrage (11), ce moyen de contrôle active le moyen de commande (13) du système de filtration (10) pour déboucher ledit moyen de filtrage (11).

## Claims

1. An air intake (2) equipped with a flow passage (4) for guiding incident air towards an aircraft turbo engine (1), the said air intake (2) being provided with an intake section (3), through which the air penetrates into the said passage (4), and a filtration system, the filtration system (10) being equipped with a foldable filtering means (11) which is arranged at the intake section (3) of the passage, the said filtration system (10) including a control means (13), **characterised in that** the control means (13) allows a force to be exerted in a first direction (Y, Y') on a free end (11') of the said foldable filtering means (11), for compressing or relaxing the said filtering means (10) in order to vary its dimension such that the filtration power of the filtration system (10) may be regulated, a means (12) of guiding the filtration system (10) allowing guidance of the displacement of the said free end (11') which is brought about by the said control means (13).

2. An air intake according to Claim 1, **characterised in that** the said control means (13) is arranged outside the said passage (4).

3. An air intake according to either of the preceding claims, **characterised in that** the said first direction (Y, Y') is at an angle of between 75 and 125 degrees with a second direction (X) in which the air passes through the said intake section (3).

4. An air intake according to any one of the preceding claims, **characterised in that** the said foldable filtering means (11) includes a planar filter equipped with fibres, the said planar filter being folded into an accordion shape such that the dimension in the said first direction (Y, Y') of the foldable filtering means (11) may be variable.

5. An air intake according to any one of the preceding claims, **characterised in that** the said guiding means (12) includes at least one grille (12'), which is arranged upstream of the filtering means (11) in relation to the direction of flow of the air through the filtration system (10).

6. An air intake according to Claim 5, **characterised in that** the said filtration system (10) is equipped with a means of heating the said grille (12', 12").

7. An air intake according to any one of the preceding claims, **characterised in that** the said control means (13) compresses or relaxes the filtering means (11) to vary its dimension (L3) in the said first direction (Y, Y') as required.

8. An air intake according to Claim 7, **characterised in that** when the said dimension (L3) is maximised the filtering means (11) projects out of the intake section (3).

9. An air intake according to any one of the preceding claims, **characterised in that** the said filtering means (11) is contained within a plane.

10. An air intake according to Claim 9, **characterised in that** the said control means (13) includes at least one jack (13') which is arranged in the said plane, for exerting a force on the filtering means (11) in the said first direction (Y).

11. An air intake according to any one of Claims 1 to 8, **characterised in that** the said filtering means (11) includes at least one filtering portion (21, 22, 23, 24) which describes the arc of a circle.

12. An air intake according to Claim 11, **characterised in that** the said control means (13) includes an actuator and a ring (25) which is integrally formed with the free end (11') of each filtering portion (21, 22, 23, 24) of the filtering means (11), the said actuator being suitable for causing the said ring (25) to perform a rotary movement about its centre of rotation.

13. A method for filtering the air entering an aircraft turbo engine (1) with the aid of an air intake (2) according to any one of the preceding claims, equipped with a filtration system (10) including a foldable filtering means (11), a guiding means (12) and a control means (13), during which, during a regulating phase (REG), when a means of monitoring the said air intake (2) detects the undesirable presence of particles in the air with the aid of information relating to at least one inspection parameter, this information being transmitted by at least one sensor, the said monitoring means triggers an increase or a decrease in the filtration power of the filtering means (11) as a function of at least one regulating parameter by compressing or relaxing the filtering means (11) to vary its dimension.

14. A method according to Claim 13, **characterised in that** the said at least one inspection parameter is selected from the first list, below, which comprises:
- the size of the particles in the air upstream of the filtering means (11)
- the number of particles in the air upstream of the filtering means (11)
- the size of the particles in the air downstream of the filtering means (11)
- the number of particles in the air downstream of the filtering means (11) and
- the loss in the pressure generated by the filtering means (11).

15. A method according to either of Claims 13 and 14, **characterised in that** the said at least one regulating parameter is selected from the second list, below, which comprises:
- the size of the particles capable of entering the turbo engine (1),
- the atmospheric conditions outside the aircraft, such as the pressure of the external air, the temperature of the external air and the altitude of the aircraft, and
- the state of operability of the turbo engine (1), such as the potential distance still to fly of the turbo engine (1).

16. A method according to any one of Claims 13 to 15, **characterised in that**, during a preliminary phase (PRE), where the aircraft is a twin-engine aircraft, if a single turbo engine (1) is functioning, the monitoring means activates the control means to minimise the filtration power of the filtering means (11).

17. A method according to any one of Claims 13 to 16, **characterised in that**, during an optional phase (OPT), when a means of monitoring the said air intake (2) detects the presence of ice, this monitoring means activates a heating means for heating a grille (12', 12") of a means of guiding the filtering means (11).

18. A method according to any one of Claims 13 to 17, **characterised in that**, during a monitoring phase (CONT), when a means of monitoring the said air intake (2) detects the fact that the filtering means (11) is at least partly blocked, this monitoring means activates the control means (13) of the filtration system (10) to unblock the said filtering means (11).

## Patentansprüche

1. Lufteinlass (2) mit einer Strömungszuführung (4) zum Leiten der einfallenden Luft auf einen Turbomotor (1) eines Luftfahrzeugs, wobei der Lufteinsatz (2) mit einem Eingangsbereich (3) versehen ist, durch den die Luft in die Strömungszuführung (4) eindringt sowie mit einem Filtersystem, wobei das Filtersystem (10) mit einem faltbaren Filter (11) versehen ist, der im Eingangsbereich (3) der Strömungszuführung angeordnet ist und das Filtersystem (10) Steuermittel (13) aufweist, **dadurch gekennzeichnet, dass** das Steuermittel (13) einer Kraft in eine erste Richtung (Y, Y') auf ein freies Ende (11') des faltbaren Filters (11) ausüben kann, um den Filter (10) zu komprimieren oder zu strecken um seine Abmessungen zu verändern, der Art, dass **dadurch** die Filterfähigkeit des Filtersystems (10) geregelt wird, und wobei ein Führungsmittel (12) des Filtersystems (10) vorgesehen ist, welches es erlaubt die Bewegung des freien Endes (11'), die durch das Steuermittel (13) hervorgerufen wird, zu führen.

2. Lufteinlass nach Anspruch 1, **dadurch gekennzeichnet, dass** das Steuermittel (13) außerhalb der Strömungszuführung (4) angeordnet ist.

3. Lufteinlass nach einem der vorstehenden Ansprüche, **dadurch gekennzeichnet, dass** die erste Richtung (Y, Y') zu einer zweiten Richtung (X) mit der die Luft den Eingangsbereich (3) durchquert einen Winkel zwischen 75 und 125° einnimmt.

4. Lufteinlass nach einem der vorstehenden Ansprüche, **dadurch gekennzeichnet, dass** der faltbare Filter (11) ein mit Fasern versehenen ebenen Filter aufweist, wobei der ebene Filter nach Art eines Akkordeons gefaltet ist, sodass seiner Abmessung in der ersten Richtung (Y, Y') des faltbaren Filters (11) veränderbar ist.

5. Lufteinlass nach einem der vorstehenden Ansprüche, **dadurch gekennzeichnet, dass** das Führungsmittel (12) mindestens ein Gitter (12') aufweist, welches bezüglich der Strömungsrichtung der Luft durch den Filter (10) Strom auf zum Filter (11) angeordnet ist.

6. Lufteinlass nach Anspruch 5, **dadurch gekennzeichnet, dass** das Filtersystem (10) mit einer Heizung des Gitters (12', 12") versehen ist.

7. Lufteinlass nach einem der vorstehenden Ansprüche, **dadurch gekennzeichnet, dass** das Steuermittel (13) den Filter (11) komprimiert oder streckt um seine Abmessung (L3) in der ersten Richtung (Y, Y') je nach Bedarf zu verändern.

8. Lufteinlass nach Anspruch 7, **dadurch gekennzeichnet, dass** wenn die Abmessung (L3) maximiert ist, der Filter (11) den Eingangsbereich (3) überdeckt.

9. Lufteinlass nach einem der vorstehenden Ansprüche, **dadurch gekennzeichnet, dass** der Filter (11) in einer Ebene liegt.

10. Lufteinlass nach Anspruch 9, **dadurch gekennzeichnet, dass** das Steuermittel (13) mindestens einen Stellzylinder (13') aufweist, der in dieser Ebene angeordnet ist, um eine Kraft auf den Filter (11) entlang dieser ersten Richtung (Y) auszuüben.

11. Lufteinlass nach einem der Ansprüche 1 bis 8, **dadurch gekennzeichnet, dass** der Filter (11) mindestens einen Filterbereich (21, 23, 24) aufweist, der einen Kreisbogen beschreibt.

12. Lufteinlass nach Anspruch 11, **dadurch gekennzeichnet, dass** das Steuermittel (13) ein Betätigungsmittel und einem Reif (25) aufweist, der am freien Ende (11') eines jeden Filterbereichs (21, 22, 23, 24) des Filters (10) befestigt ist, wobei das Betätigungsmittel den Reif (25) in eine Drehbewegung um seinen Mittelpunkt versetzen kann.

13. Verfahren zum Filtern von in einem Turbomotor eines Luftfahrzeugs eintretender Luft mittels eines Lufteinlasses (2) gemäß einem der vorstehenden Ansprüche mit einem Filtersystem (10), welches einen faltbaren Filter (11) ein Führungsmittel (12) und ein Steuermittel (13) aufweist, bei dem während einer Regelphase (REG), wenn ein Überwachungsmittel des Lufteinlasses (2) die nicht erwünschte Präsenz von Partikeln in der Luft erfasst, mithilfe von Informationen bezüglich mindestens eines von einem Detektor übermittelten Überwachungsparameters, das Steuermittel einer Erhöhung oder einer Verminderung der Filterfähigkeit des Filters (11) in Abhängigkeit von mindestens einem Regelparameter anordnet, in dem der Filter (11) komprimiert oder gestreckt wird um seine Abmessungen zu verändern.

14. Verfahren nach Anspruch 13, **dadurch gekennzeichnet, dass** der mindestens eine Überwachungsparameter aus der folgenden ersten Liste gewählt ist, die umfasst:
- Die Größe der Partikel, die in der Luft stromauf des Filters (11) enthalten sind,
- die Anzahl der Partikel, die in der Luft stromauf des Filters (11) enthalten ist,
- die Größe der Partikel, die in der Luft stromab der Filters (11) enthalten sind,
- die Anzahl der Partikel, die in der Luft stromab des Filtermittels (11) enthalten sind, und
- der Druckverlust, der durch den Filter (11) erzeugt wird.

15. Verfahren nach einem der Ansprüche 13 oder 14, **dadurch gekennzeichnet, dass** mindestens einer der Regelparameter aus der folgenden zweiten Liste gewählt ist, die umfasst:
- Die Größe der für den Turbometer (1) zulässigen Partikel,
- die äußeren atmosphärischen Bedingungen am Luftfahrzeug, wie beispielsweise der Außenluftdruck, die Außenlufttemperatur und die Flughöhe des Luftfahrzeugs, und
- der Zustand des Turbomotors (1), wie beispielsweise die mögliche Restflugfähigkeit des Turbomotors (1).

16. Verfahren nach einem der Ansprüche 13 bis 15, **dadurch gekennzeichnet, dass** während einer vorläufigen Phase (PRE) das Luftfahrzeug, welches ein zweimotoriges Luftfahrzeug ist, wenn nur ein Turbomotor funktioniert, das Überwachungsmittel das Steuermittel aktiviert, um die Filterfähigkeit des Filters (11) zu minimieren.

17. Verfahren nach einem der Ansprüche 13 bis 16, **dadurch gekennzeichnet, dass** während einer optionalen Phase (OPT), wenn das Überwachungsmittel des Lufteinlasses (2) eine Vereisung feststellt, dieses Überwachungsmittel eine Heizung aktiviert, um ein Gitter (12', 12") eines Führungsmittel des Filters (11) zu aktivieren.

18. Verfahren nach einem der Ansprüche 13 bis 17, **dadurch gekennzeichnet, dass** während einer Prüfphase (CONT) wenn das Überwachungsmittel des Lufteinlasses (2) eine zumindest teilweise Verstopfung des Filters (11) erfasst, dieses Überwachungsmittel das Steuermittel (13) des Filtersystems (10) aktiviert, um den Filter (11) freizumachen.
